# EUROPEAN PATENT SPECIFICATION

(11) **EP 3 119 138 B1**
(45) Date of publication and mention of the grant of the patent: **20.02.2019**
(21) Application number: 14885354.2
(22) Date of filing: 25.12.2014
(51) Int. Cl.: H04W 56/00

(54) **AIR INTERFACE SYNCHRONIZATION METHOD AND SYSTEM**
VERFAHREN UND SYSTEM FÜR LUFTSCHNITTSTELLENSYNCHRONISATION
PROCÉDÉ ET SYSTÈME DE SYNCHRONISATION D'INTERFACE RADIO

(30) Priority: 11.03.2014 CN 201410088825
(43) Date of publication of application: 18.01.2017
(73) Proprietor: ZTE Corporation, Shenzhen, Guangdong 518057 (CN)
(72) Inventor: GOU, Wei, Shenzhen Guangdong 518057 (CN); ZHAO, Yajun, Shenzhen Guangdong 518057 (CN); HAN, Xiaogang, Shenzhen Guangdong 518057 (CN); XIE, Feng, Shenzhen Guangdong 518057 (CN)
(74) Representative: Brevalex
(86) International application number: PCT/CN2014/095017
(87) International publication number: WO 2015/135361

(56) References cited:
- WO-A1-2011/097770
- WO-A1-2013/042954
- WO-A1-2013/147472
- WO-A2-2012/100200
- CN-A- 102 137 482
- CN-A- 102 149 185
- US-A1- 2013 059 592

## Description

### TECHNICAL FIELD

The disclosure relates to the field of wireless communication, and in particular to an air interface synchronization method and system.

### BACKGROUND

In Long Term Evolution (LTE), a synchronization solution for a small cell and a macro cell is currently studied, the synchronization solution may be configured for synchronization between small cells (as well as other scenarios, including cell synchronization between different operators). The small cell receives a Reference Signal (RS) for air interface synchronization from the macro cell, and then calculates a time deviation with the macro cell to calibrate time, fulfilling the aim of synchronization with the macro cell.

At present, a Multicast/Broadcast Single Frequency Network (MBSFN)-subframe-based manner has been determined as a basis for air interface synchronization. A basic principle of the MBSFN-subframe-based manner is as follows.

A small cell implements synchronization with the macro cell through monitoring a Cell-specific Reference Signal (CRS) sent by a macro cell, and the small cell configures own subframe (monitoring subframe) of the CRS received from the macro cell into an MBSFN subframe and sends the MBSFN subframe to subordinate User Equipment (UE). In such a manner, influence on transmission, measurement and the like of a Physical Downlink Shared Channel (PDSCH) of the subordinate UE of the small cell may be minimized.

Under a small cell deployment, particularly under a high-density small cell deployment, many small cells required to execute monitoring may usually not directly receive RSs for air interface synchronization from a macro cell, but are required to receive RSs for air interface synchronization from adjacent small cells, which are taken as source cells, to implement synchronization with the small cells; and however, since there exists a certain time difference between a small cell and a macro cell and particularly a source cell under a multi-hop condition may have a greater time difference with the macro cell, some companies suggest introduction of a parameter: layer number, configured to describe a synchronization level of the source cell. For example, if it is specified that a layer number of a macro cell that serves as a source cell is 0, small cell 1 directly receives an RS for air interface synchronization from the macro cell for synchronization with the macro cell. Furthermore, when small cell 1 serves as a source cell of small cell 2, a layer number of small cell 1 is 1; when small cell 2 serves as a source cell of small cell 3, a layer number of small cell 2 is 2; and so on. It is considered that there are no time differences between source cells of the same layer.

Small cells are usually deployed in a high-density manner, thus the concept of small cell cluster is introduced to facilitate management. Subordinate small cells of the same macro cell belong to different small cell clusters according to geographical positions respectively. There may also exist certain interference among the small cell clusters, and the small cells are required to avoid a different small cell cluster when selecting source cells.

However, an existing air interface synchronization process has some problems.

The existing process is as follows: a target cell sends an air interface synchronization request containing cell information of a source cell to a core network; then the core network interacts with the source cell to acquire layer information and synchronization state information of the source cell, and then sends the layer information and synchronization state information of the source cell to the target cell; the target cell independently determines whether to select the source cell as its own source cell, and the process is ended.

Obviously, in the existing process, the source cell does not know whether it is finally selected by a certain target cell as a source cell. Furthermore, according to the latest discussion about LTE air interface synchronization enhancement, the source cell is still required to send a listening RS when being off, and then according to the existing process, since the source cell does not know whether it is selected as the source cell, the source cell may not correctly determine whether to still send the listening RS when being off.

International Patent Application Publication No. WO2013/042954 A1 discloses a method and apparatus for acquiring synchronization in radio communication system. The method includes receiving a synchronization signal from a first transmission point, and acquiring synchronization to a second transmission point using the synchronization signal and information including a subframe offset received from the first transmission point, wherein the subframe offset is a subframe difference value between the first transmission point and the second transmission point.

### SUMMARY

In order to solve the existing technical problem, the disclosure is intended to provide an air interface synchronization method and system, so as to implement air interface synchronization between cells.

The technical solutions of the disclosure are implemented as follows.

The disclosure provides an air interface synchronization method, which may include that:
obtaining, by an eNB to which a target cell belongs, a listening RS subframe position, sending listening RS subframe position information to an eNB to which an adjacent cell belongs, and indicating the eNB to which the adjacent cell belongs to execute muting at the listening RS subframe position.

According to an exemplary embodiment, obtaining, by the eNB to which the target cell belongs, the listening RS subframe position may include:
receiving, by the eNB to which the target cell belongs, the listening RS subframe position sent by a central node or request responses which are sent by eNBs to which candidate source cells belong and contain the listening RS subframe position information, layer numbers and RS configuration information.

According to an exemplary embodiment, sending the listening RS subframe position information to the eNB to which the adjacent cell belongs and indicating the eNB to which the adjacent cell belongs to execute muting at the listening RS subframe position may include:
sending the listening RS subframe position information to the eNB to which the adjacent cell belongs through an S1 interface, or an X2 interface, or a wireless air interface or a backhaul link, and indicating, through identification information or a command message, the eNB to which the adjacent cell belongs to execute muting at the listening RS subframe position; or
sending the listening RS subframe position information to the eNB to which the adjacent cell belongs through the S1 interface, or the X2 interface, or the wireless air interface or the backhaul link, and after the eNB to which the adjacent cell belongs receives the listening RS subframe position information and the indication, executing, by the eNB to which the adjacent cell belongs, muting at the listening RS subframe position, or determining, by the eNB to which the adjacent cell belongs, whether to execute muting at the listening RS subframe position according to own condition.

According to an exemplary embodiment, the listening RS subframe position information is described through period information of a listening RS subframe and starting subframe position information of the listening RS subframe; or
the listening RS subframe position information is information about a subframe position where the eNB to which the target cell belongs monitors an RS.

According to an exemplary embodiment, the identification information or the command message is sent to the eNB to which the adjacent cell belongs through the S1 interface, or the X2 interface, or the wireless air interface or the backhaul link.

According to an exemplary embodiment, a starting subframe position indicated by the starting subframe position information is defined with respect to subframe 0 of radio frame 0.

The disclosure provides an air interface synchronization system, which may include: an eNB to which a target cell belongs and an eNB to which an adjacent cell belongs,
wherein the eNB to which the target cell belongs may be configured to obtain a listening RS subframe position, send listening RS subframe position information to the eNB to which the adjacent cell belongs, and indicate the eNB to which the adjacent cell belongs to execute muting at the listening RS subframe position.

According to an exemplary embodiment, the eNB to which the target cell belongs is configured to receive the listening RS subframe position sent by a central node or request responses which are sent by eNBs to which candidate source cells belong and contain the listening RS subframe position information, layer numbers and RS configuration information.

According to an exemplary embodiment, the eNB to which the target cell belongs is configured to: send the listening RS subframe position information to the eNB to which the adjacent cell belongs through an S1 interface, or an X2 interface, or a wireless air interface or a backhaul link, and indicate, through identification information or a command message, the eNB to which the adjacent cell belongs to execute muting at the listening RS subframe position; or
send the listening RS subframe position information to the eNB to which the adjacent cell belongs through the S1 interface, or the X2 interface, or the wireless air interface or the backhaul link; and
the eNB to which the adjacent cell belongs is configured to, after receiving the listening RS subframe position information and the indication, execute muting at the listening RS subframe position, or determine whether to execute muting at the listening RS subframe position according to own condition.

According to an exemplary embodiment, the eNB to which the target cell belongs is configured to describe the listening RS subframe position information through period information of a listening RS subframe and starting subframe position information of the listening RS subframe.

According to an exemplary embodiment, the listening RS subframe position information is information about a subframe position where the eNB to which the target cell belongs monitors an RS.

According to an exemplary embodiment, the eNB to which the target cell belongs is configured to indicate, through the identification information or the command message, the eNB to which the adjacent cell belongs to execute muting at the listening RS subframe position, wherein the identification information or the command message is sent to the eNB to which the adjacent cell belongs through the S1 interface, or the X2 interface, or the wireless air interface or the backhaul link.

According to the air interface synchronization method and system of the embodiments of the disclosure, a source cell may timely learn about whether it is selected as the source cell, so that the source cell may correctly send a listening RS when being off, and thus it is possible to avoid the problem in the existing process that the source cell which may not learn about whether it is selected as the source cell by another cell may not determine whether to continue sending the listening RS when being off.

### BRIEF DESCRIPTION OF THE DRAWINGS

Fig. 1 is a flowchart of a first air interface synchronization method according to an embodiment of the disclosure;
Fig. 2 is a flowchart of a second air interface synchronization method according to an embodiment of the disclosure;
Fig. 3 is a flowchart of a third air interface synchronization method according to an embodiment of the disclosure;
Fig. 4 is a flowchart of a fourth air interface synchronization method according to an embodiment of the disclosure;
Fig. 5 is a structure diagram of first, third and fourth air interface synchronization systems according to an embodiment of the disclosure;
Fig. 6 is a structure diagram of a second air interface synchronization system according to an embodiment of the disclosure;
Fig. 7 is a structure diagram of a fifth air interface synchronization system according to an embodiment of the disclosure;
Fig. 8 is a structure diagram of a sixth air interface synchronization system according to an embodiment of the disclosure;
Fig. 9 is a structure diagram of a seventh air interface synchronization system according to an embodiment of the disclosure;

The parameters may also be added to an existing message of an X2 interface or an S1 interface for implementation.

These parameters are used for corresponding methods, and specific air interface synchronization methods will be described below.

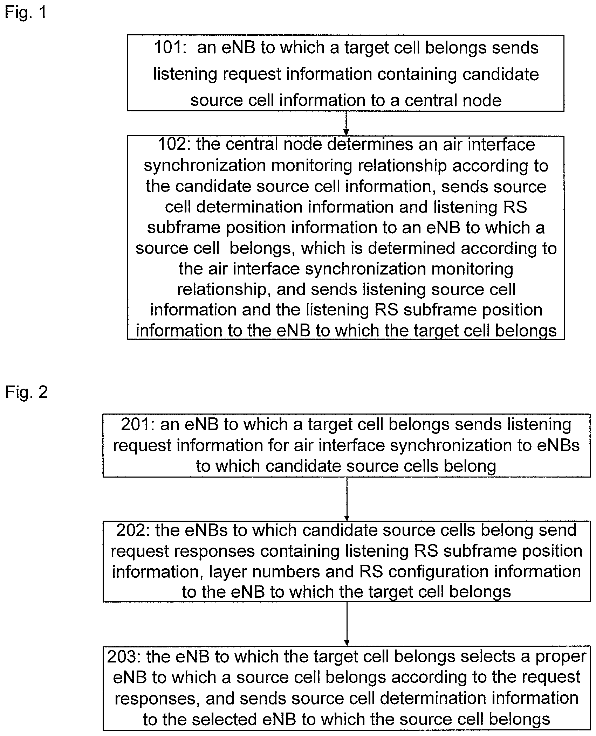

Method 1: an air interface synchronization method, as shown in Fig. 1, mainly includes the following steps:
Step 101: an eNB to which a target cell belongs sends listening request information containing candidate source cell information to a central node; and
Step 102: the central node determines an air interface synchronization monitoring relationship according to the candidate source cell information, sends source cell determination information and listening RS subframe position information to an eNB to which a source cell belongs determined according to the air interface synchronization monitoring relationship, and sends listening source cell information and the listening RS subframe position information to the eNB to which the target cell belongs.

In the process, the following parameters are included: the listening RS subframe position information, the candidate source cell information, the source cell determination information and the listening request information.

Method 2: an air interface synchronization method, as shown in Fig. 2, mainly includes the following steps:
Step 201: an eNB to which a target cell belongs sends listening request information for air interface synchronization to eNBs to which candidate source cells belong;
Step 202: the eNBs to which the candidate source cells belong send request responses containing listening RS subframe position information, layer numbers and RS configuration information to the eNB to which the target cell belongs; and
Step 203: the eNB to which the target cell belongs selects a proper eNB to which the source cell belongs according to the request responses, and sends source cell determination information to the selected eNB to which the source cell belongs.

In the method, the following parameters are included: the listening RS subframe position information, the source cell determination information, the layer number, the RS configuration information and the listening request information.

Wherein, the eNB to which the target cell belongs may obtain information of own candidate source cells by measurement (such as Radio Resource Management (RRM) measurement). The information included in the request responses may practically be one or more of the RS subframe position information, the layer number and the RS configuration information.

Wherein, the eNB to which the target cell belongs selects the proper eNB to which the source cell belongs according to the request responses, and then may also not send the source cell determination information to the selected eNB to which the source cell belongs, and at this time, the eNB to which the source cell belongs, which sends the request response, defaults that it has been selected as an eNB to which a source cell belongs of an eNB to which a certain cell belongs. That is, the source cell determination information may optionally not be send to a selected source cell, which may be applicable to all related methods of the disclosure. For example, Step 203 in method 2 may be as follows: the eNB to which the target cell belongs selects a proper eNB to which the source cell belongs according to the request responses.

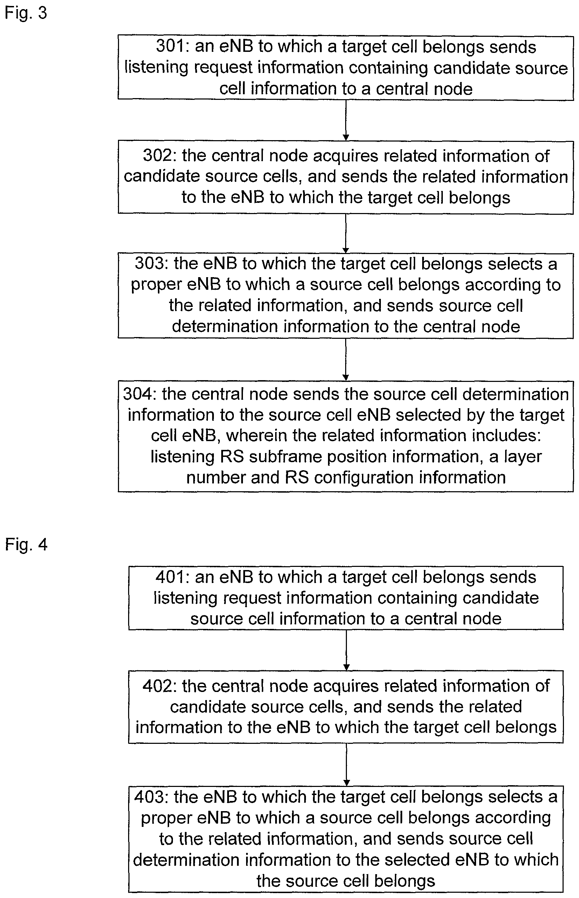

Method 3: an air interface synchronization method, as shown in Fig. 3, mainly includes the following steps:
Step 301: an eNB to which a target cell belongs sends listening request information containing candidate source cell information to a central node;
Step 302: the central node acquires related information of candidate source cells, and sends the related information to the eNB to which the target cell belongs;
Step 303: the eNB to which the target cell belongs selects a proper eNB to which the source cell belongs according to the related information, and sends source cell determination information to the central node; and
Step 304: the central node sends the source cell determination information to the eNB to which the source cell belongs selected by the eNB to which the target cell belongs, wherein the related information includes: listening RS subframe position information, a layer number and RS configuration information.

In the method, the following parameters are included: the listening RS subframe position information, the source cell determination information, the layer number, the RS configuration information, the listening request information and the candidate source cell information.

Here, Step 303 may also be as follows: the eNB to which the target cell belongs selects a proper eNB to which the source cell belongs according to the related information.

Method 4: an air interface synchronization method, as shown in Fig. 4, mainly includes the following steps:
Step 401: an eNB to which a target cell belongs sends listening request information containing candidate source cell information to a central node;
Step 402: the central node acquires related information of candidate source cells, and sends the related information to the eNB to which the target cell belongs; and
Step 403: the eNB to which the target cell belongs selects a proper eNB to which the source cell belongs according to the related information, and sends source cell determination information to the selected eNB to which the source cell belongs,
wherein the related information includes: listening RS subframe position information, a layer number and RS configuration information.

In the method, the following parameters are included: the listening RS subframe position information, the source cell determination information, the layer number, the RS configuration information, the listening request information and the candidate source cell information.

Here, Step 403 may also be as follows: the eNB to which the target cell belongs selects a proper eNB to which the source cell belongs according to the related information.

Method 5: an air interface synchronization method includes that:
an eNB to which a target cell belongs selects a proper eNB to which the source cell belongs, sends source cell determination information to the selected eNB to which the source cell belongs, and sends listening RS subframe position information determined by the eNB to which the target cell belongs; and the eNB to which the source cell belongs sends a listening RS at a listening RS subframe position, wherein the step that the eNB to which the target cell belongs sends the source cell determination information to the selected eNB to which the source cell belongs is optional.

Here, when the eNB to which the source cell belongs is required to be off, it is necessary to send the listening RS at the listening RS subframe position.

In addition, the eNB to which the source cell belongs may also send the listening RS subframe position to an eNB to which an adjacent cell belongs and indicate the eNB to which the adjacent cell belongs to execute muting at the listening RS subframe position.

In the method, the following parameters are included: the source cell determination information and the listening RS subframe position information.

Method 6: an air interface synchronization method includes that:
a central node may coordinate to send source cell determination information to an eNB to which a source cell belongs of a cell selected as a source cell, and simultaneously sends listening RS subframe position information; and the eNB to which the source cell belongs sends a listening RS at a listening RS subframe position, wherein the step that the central node simultaneously sends the listening RS subframe position information is optional.

Here, when the eNB to which the source cell belongs is required to be off, it is necessary to send the listening RS at the listening RS subframe position.

In the method, the following parameters are included: the source cell determination information and the listening RS subframe position information.

Method 7: an air interface synchronization method includes that:
an eNB to which a target cell belongs obtains a listening RS subframe position, notifies listening RS subframe position information to an eNB to which an adjacent cell belongs, and indicates the eNB to which the adjacent cell belongs to execute muting at the listening RS subframe position.

The eNB to which the adjacent cell belongs receives the listening RS subframe position information and the indication, and then the eNB to which the adjacent cell belongs may immediately execute muting at the listening RS subframe position, and may also determine whether to execute muting at the listening RS subframe position according to own condition.

The indication may be identification information or a command message, for example: identification information 1 or 0 indicates execution of muting, or command message muting indicates execution of muting.

In the method, the following parameter is included: the listening RS subframe position information; the listening RS subframe position information is described through period information of a listening RS subframe and starting subframe position information of the listening RS subframe, the listening RS subframe position information is a subframe position where the eNB to which the target cell belongs monitors (receives) an RS, and the eNB to which the target cell belongs implements air interface synchronization by virtue of the RS in the subframe; and
interaction between the eNB to which the target cell belongs and the eNB to which the adjacent cell belongs of a target cell may be implemented through an S1 interface, or an X2 interface, a wireless air interface or a backhaul link.

The step that the eNB to which the target cell belongs obtains the listening RS subframe position is implemented as follows:
the eNB to which the target cell belongs receives the listening RS subframe position sent by a central node or request responses which are sent by eNBs to which candidate source cells belong and contain the listening RS subframe position information, layer numbers and RS configuration information, or monitors RSs of candidate source cells to determine the listening RS subframe position information.
wherein, the step that the eNB to which the target cell belongs sends the listening RS subframe position information to the eNB to which the adjacent cell belongs and indicates the eNB to which the adjacent cell belongs to execute muting at the listening RS subframe position is implemented as follows: the listening RS subframe position information is sent to the eNB to which the adjacent cell belongs through the S1 interface, or the X2 interface, or the wireless air interface or the backhaul link, and the eNB to which the adjacent cell belongs is indicated, through the identification information or the command message, to execute muting at the listening RS subframe position.

Wherein, interaction about the identification information or the command message is also implemented through the S1 interface, or the X2 interface, or the wireless air interface or the backhaul link.

Method 8: an air interface synchronization method includes that:
a central node determines a listening RS subframe position of a target cell, and sends listening RS subframe position information to an eNB to which a target cell belongs; and
the eNB to which the target cell belongs sends the listening RS subframe position information to an eNB to which an adjacent cell belongs of the eNB to which the target cell belongs.

Method 9: an air interface synchronization method includes that:
a central node may coordinate to determine and notify a listening RS subframe position of an eNB to which a target cell belongs to the eNB to which the target cell belongs, and the central node simultaneously notifies an eNB to which an adjacent cell belongs of the eNB to which the target cell belongs to execute muting at the listening RS subframe position.

In the method, the following parameter is included: listening RS subframe position information.

Method 10: an air interface synchronization method includes that:
an eNB to which a target cell belongs selects a proper eNB to which the source cell belongs, and sends source cell determination information to the selected eNB to which the source cell belongs; the eNB to which the source cell belongs notifies listening RS subframe position information to an eNB to which an adjacent cell belongs; and the eNB to which the adjacent cell belongs executes muting at a listening RS subframe position, wherein the step that the eNB to which the target cell belongs sends the source cell determination information to the selected eNB to which the source cell belongs is optional.

In the method, the following parameters are included: the listening RS subframe position information and the source cell determination information. Referring to descriptions in Method 2, after a proper source cell is selected for a target cell, the source cell determination information may also not be sent to the selected eNB to which the source cell belongs.

Method 11: an air interface synchronization method includes that:
an eNB to which a target cell belongs sends listening RS subframe position information to an eNB to which an adjacent cell belongs belonging to the same operator, and indicates the eNB to which the adjacent cell belongs belonging to the same operator to execute muting at a listening RS subframe position.

The eNB to which the adjacent cell belongs receives the listening RS subframe position information and the indication, and then the eNB to which the adjacent cell belongs may immediately execute muting at a listening RS subframe position, and may also determine whether to execute muting at the listening RS subframe position according to own condition.

The indication may be identification information or a command message, for example: identification information 1 or 0 indicates execution of muting, or command message muting indicates execution of muting.

In the method, the following parameter is included: the listening RS subframe position information, the listening RS subframe position information is described through period information of a listening RS subframe and starting subframe position information of the listening RS subframe, and the listening RS subframe position information is a subframe position where the eNB to which the target cell belongs monitors an RS; and
interaction between the eNB to which the target cell belongs and the eNB to which the adjacent cell belongs of a target cell may be implemented through an S1 interface, or an X2 interface, a wireless air interface or a backhaul link.

All of the abovementioned 11 methods may optionally include that:
when the eNB to which the target cell belongs, or the eNB to which the source cell belongs or the monitoring relationship configured by the central node changes and influences air interface synchronization, for example, the eNB to which the target cell belongs may not correctly monitor a listening RS of a specified source cell, or the eNB to which the source cell belongs may not send a listening RS according to a specified listening RS subframe position, or the central node updates the monitoring relationship, a configuration relationship and a muting relationship, such changes may influence air interface synchronization, so that the eNB to which the target cell belongs, the eNB to which the source cell belongs and the central node are required to interact about such changes and timely notify an adjacent cell to timely regulate the related monitoring relationship, configuration relationship and muting relationship.

When the eNB to which the source cell belongs may not send the listening RS according to the specified listening RS subframe position, the eNB to which the source cell belongs is also required to timely notify the eNB to which the adjacent cell belongs, for example: the eNB to which the source cell belongs sends a new listening RS subframe position to the eNB to which the adjacent cell belongs.

All of the abovementioned 11 methods optionally include that: when the eNB to which the source cell belongs is required to be off, the eNB to which the source cell belongs is still required to send the listening RS to the eNB to which the target cell belongs at the listening RS subframe position; and when the eNB to which the source cell belongs determines that it is not monitored by the eNB to which the target cell belongs, the eNB to which the source cell belongs is not required to continue sending the listening RS.

For example, when the eNB to which the target cell belongs is required to be off, the eNB to which the target cell belongs may send listening request information to the central node or the eNB to which the source cell belongs, the listening request information describing that the eNB to which the target cell belongs does not require the eNB to which the source cell belongs any longer through bit information. Since the eNB to which the target cell belongs is to be off, the eNB to which the target cell belongs sends listening request information to the eNB to which the source cell belongs, the listening request information describing that the eNB to which the target cell belongs does not require the eNB to which the source cell belongs any longer. The eNB to which the source cell belongs which receives the information is informed of not providing monitoring for air interface synchronization for the eNB to which the target cell belongs.

For example, the eNB to which the target cell belongs selects a suitable eNB to which the source cell belongs from multiple eNBs to which candidate source cells belong, and for the unselected eNBs to which candidate source cells belong, the eNB to which the target cell belongs sends source cell determination information and sets a bit meaning of the source cell determination information as: an eNB to which a cell belongs, which receive the source cell determination information, will not be selected as the eNB to which the source cell belongs.

All of the abovementioned 11 methods include that:
the central node includes an eNB to which a macro cell belongs and a core network element; and
interaction among the central node, the source cell, the eNB to which the target cell belongs, the eNB to which the adjacent cell belongs of the source cell and the eNB to which the adjacent cell belongs of the target cell may be implemented through the S1 interface, the X2 interface, the wireless air interface of the backhaul link.

Specific applications of the abovementioned methods will be described below through some specific embodiments.

### Embodiment 1

When an eNB to which a target cell belongs is initially deployed or the eNB to which the target cell belongs finds that a listening RS of an eNB to which a source cell belongs gets weak during operation, the eNB to which the target cell belongs sends listening request information to a central node, the listening request information including preliminary candidate source cell information obtained by the eNB to which the target cell belongs in a measurement manner. Here, the central node is supposed to be an eNB to which a macro cell belongs.

The central node selects an eNB to which a source cell belongs for the eNB to which the target cell belongs from candidate source cells reported by the eNB to which the target cell belongs, or the central node may also provide an eNB to which a source cell belongs from non-candidate source cells, and the central node sends information about the eNB to which the source cell belongs selected for the eNB to which the target cell belongs to the eNB to which the target cell belongs.

The central node simultaneously sends source information confirmation information to the selected eNB to which the source cell belongs to make the eNB to which the source cell belongs learn about that it is selected as the eNB to which the source cell belongs, and the central node is required to timely notify latest change information to the eNB to which the source cell belongs to make the eNB to which the source cell belongs always learn about whether it is being taken as the eNB to which the source cell belongs according to the reported information of the eNB to which the target cell belongs.

In such a manner, when the eNB to which the source cell belongs is required to be off, the eNB to which the source cell belongs may judge whether it is being taken as the eNB to which the source cell belongs, sends a listening RS if being taken as the eNB to which the source cell belongs, and is not required to send the listening RS when being off if having not been taken as the eNB to which the source cell belongs.

Whether the eNB to which the source cell belongs continues sending the listening RS when being off directly influences energy saving of the eNB to which the source cell belongs and air interface synchronization performance, and if the source eNB does not know whether it is being taken as the eNB to which the source cell belongs, once the eNB to which the source cell belongs stops sending the listening RS, air interface synchronization of the eNB to which the target cell belongs is directly influenced.

### Embodiment 2

When an eNB to which a target cell belongs is initially deployed or the eNB to which the target cell belongs finds that a listening RS of an eNB to which a source cell belongs gets weak during operation, the eNB to which the target cell belongs sends listening request information to eNBs to which candidate source cells belong, the listening request information including preliminary candidate source cell information obtained by the eNB to which the target cell belongs in a measurement manner.

The eNBs to which the candidate source cells belong send request responses to a target cell, wherein the request responses may contain multiple of listening RS subframe position information, layer numbers, RS configuration information and a synchronization state of an eNB to which a source cell belongs, and the synchronization state is configured to describe whether a source cell is a synchronization source.

Then, the eNB to which the target cell belongs may rapidly receive listening RSs of the eNBs to which the candidate source cells belong according to the information in the request responses, or rapidly and directly judge whether to continue taking it as an eNB to which a source cell belongs according to the layer number or the synchronization state after acquiring the request responses of the eNBs to which the candidate source cells belong. Finally, the eNB to which the target cell belongs sends source cell determination information to the selected eNB to which the source cell belongs. If the eNB to which the target cell belongs does not select a suitable eNB to which the source cell belongs, the eNB to which the target cell belongs recollects eNBs to which candidate source cells belong and restarts the abovementioned process.

Wherein, the eNB to which the target cell belongs selects the proper eNB to which the source cell belongs according to the request responses, and then may also not send the source cell determination information to the selected eNB to which the source cell belongs. Then, the eNB to which the source cell belongs which sends the request response is required to consider that it has been selected as an eNB to which a source cell belongs of a certain cell. Such a manner is not so reasonable, but may also be adopted.

### Embodiment 3

When an eNB to which a target cell belongs is initially deployed or the eNB to which the target cell belongs finds that a listening RS of a source cell gets weak during operation, the eNB to which the target cell belongs sends listening request information to a central node (such as a network element of a core network), the listening request information including preliminary candidate source cell information obtained by the eNB to which the target cell belongs in a measurement manner.

The central node acquires related information of candidate source cells, and sends the related information to the eNB to which the target cell belongs, wherein the related information includes listening RS subframe position information, a layer number, RS configuration information and a synchronization state.

The eNB to which the target cell belongs selects a proper eNB to which the source cell belongs according to the related information, and sends source cell determination information to the central node.

The central node sends the source cell determination information to the eNB to which the source cell belongs selected by a target cell.

### Embodiment 4

When an eNB to which a target cell belongs is initially deployed or the eNB to which the target cell belongs finds that a listening RS of a source cell gets weak during operation, the eNB to which the target cell belongs sends listening request information to a central node (such as a network element of a core network), the listening request information including preliminary candidate source cell information obtained by the eNB to which the target cell belongs in a measurement manner.

The central node acquires related information of candidate source cells, and sends the related information to the eNB to which the target cell belongs, wherein the related information includes: listening RS subframe position information, a layer number, RS configuration information and a synchronization state.

The eNB to which the target cell belongs selects a proper eNB to which the source cell belongs according to the related information, and sends source cell determination information to the selected eNB to which the source cell belongs.

In order to implement the abovementioned methods, the embodiment of the disclosure further provides an air interface synchronization system, which may be structured as follows.

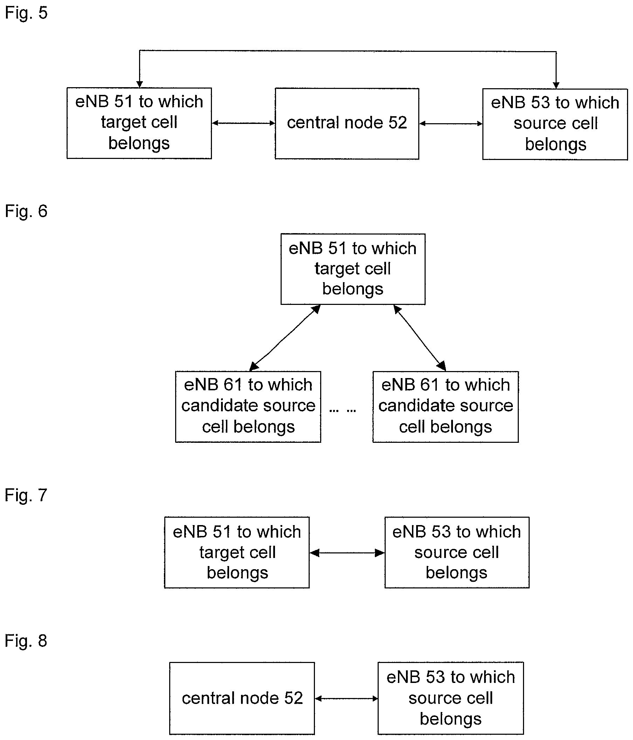

First: as shown in Fig. 5, the system includes: an eNB 51 to which a target cell belongs, a central node 52 and an eNB 53 to which a source cell belongs, wherein
the eNB 51 to which the target cell belongs sends listening request information containing candidate source cell information to the central node 52, and receives listening source cell information and listening RS subframe position information;
the central node 52 determines an air interface synchronization monitoring relationship according to the candidate source cell information, sends source cell determination information and the listening RS subframe position information to the eNB 53 to which the source cell belongs determined according to the air interface synchronization monitoring relationship, and sends the listening source cell information and the listening RS subframe position information to the eNB 51 to which the target cell belongs; and
the eNB 53 to which the source cell belongs receives the source cell determination information and the listening RS subframe position information.

Here, the central node 52 includes an eNB to which a macro cell belongs and a network element of a core network; and
when the central node 52 interacts with the eNB 53 to which the source cell belongs or the eNB 51 to which the target cell belongs, interaction is implemented through an S1 interface, or an X2 interface, or a wireless air interface or a backhaul link.

Second: as shown in Fig. 6, the system includes: an eNB 51 to which a target cell belongs and eNBs 61 to which candidate source cells belong, wherein
the eNB 51 to which the target cell belongs sends listening request information for air interface synchronization to the eNBs 61 to which the candidate source cells belong, and selects an eNB to which a source cell belongs according to request responses of the eNBs to which the candidate source cells belong; and
the eNBs 61 to which the candidate source cells belong receive the listening request information and send the request responses to the eNB 51 to which the target cell belongs, wherein the request responses includes one or more of: listening RS subframe position information, layer numbers and RS configuration information.

The eNB 51 to which the target cell belongs is further configured to send source cell determination information to the selected eNB to which the source cell belongs after selecting the eNB to which the source cell belongs according to the request responses.

Here, the eNBs 61 to which the candidate source cells belong interact with the eNB 51 to which the target cell belongs through an S1 interface, or an X2 interface, or a wireless air interface or a backhaul link.

Third: as shown in Fig. 5, the system includes: an eNB 51 to which a target cell belongs, a central node 52 and an eNB 53 to which a source cell belongs, wherein
the eNB 51 to which the target cell belongs sends listening request information containing candidate source cell information to the central node 52, and selects the eNB 53 to which the source cell belongs according to related information, sent by the central node 52, of candidate source cells; and
the central node 52 acquires the related information of the candidate source cells, and sends the related information to the eNB 51 to which the target cell belongs, wherein the related information includes one or more of: listening RS subframe position information, a layer number and RS configuration information.

The eNB 51 to which the target cell belongs is further configured to send source cell determination information to the central node 52 after selecting the eNB 53 to which the source cell belongs according to the related information;
the central node 52 is further configured to send the source cell determination
the adjacent cell eNB 121 belonging to the same operator receives the listening RS subframe position information and the indication, and then the adjacent cell eNB 121 belonging to the same operator may immediately execute muting at the listening RS subframe position, and may also determines whether to execute muting at the listening RS subframe position according to own condition.

Here, when the target cell eNB 51 interacts with the adjacent cell eNB 121 belonging to the same operator, interaction is implemented through an S1 interface, or an X2 interface, or a wireless air interface or a backhaul link.

The indication may be identification information or a command message, for example: identification information 1 or 0 indicates execution of muting, or command message muting indicates execution of muting.

Wherein, the listening RS subframe position information is described through period information of a listening RS subframe and starting subframe position information of the listening RS subframe, and the listening RS subframe position information is information about a subframe position where the target cell eNB 51 monitors an RS.

The above is only the preferred embodiment of the disclosure, may be mixed for use under the condition of no conflicts among the embodiments, and is not intended to limit the scope of protection of the disclosure.

### INDUSTRIAL APPLICABILITY

According to the embodiments of the disclosure, a source cell may timely learn about whether it is selected as the source cell, so that the source cell may correctly send a listening RS when being off, and the problem that the source cell which may not learn about whether it is selected as the source cell by another cell may not judge whether to continue sending the listening RS when being off in an existing process is further solved.
information to the eNB 53 to which the source cell belongs selected by the eNB 51 to which the target cell belongs; and
the eNB 53 to which the source cell belongs receives the source cell determination information.

Here, the central node 52 includes an eNB to which a macro cell belongs and a network element of a core network; and
the central node 52 interacts with the eNB 53 to which the source cell belongs or an eNB 51 to which a target cell belongs through an S1 interface, or an X2 interface, or a wireless air interface or a backhaul link.

Fourth: as shown in Fig. 5, the system includes: an eNB 51 to which a target cell belongs, a central node 52 and an eNB 53 to which a source cell belongs, wherein
the eNB 51 to which the target cell belongs sends listening request information containing candidate source cell information to the central node 52, and selects the eNB 53 to which the source cell belongs according to related information, sent by the central node 52, of candidate source cells; and
the central node 52 acquires the related information of the candidate source cells, and sends the related information to the eNB 51 to which the target cell belongs, wherein the related information includes one or more of: listening RS subframe position information, a layer number and RS configuration information.

The eNB 51 to which the target cell belongs is further configured to send source cell determination information to the selected eNB 53 to which the source cell belongs after selecting the eNB 53 to which the source cell belongs according to the related information.

Here, the central node 52 includes an eNB to which a macro cell belongs and a network element of a core network; and
the eNB 51 to which the target cell belongs interacts with the eNB 53 to which the source cell belongs or the central node 52 through an S1 interface, or an X2 interface, or a wireless air interface or a backhaul link.

Fifth: as shown in Fig. 7, the system includes: an eNB 51 to which a target cell belongs and an eNB 53 to which a source cell belongs, wherein
the eNB 51 to which the target cell belongs selects the eNB 53 to which the source cell belongs, and sends source cell determination information and listening RS subframe position information to the selected eNB 53 to which the source cell belongs; and
the eNB 53 to which the source cell belongs sends a listening RS at a listening RS subframe position.

Here, the eNB 53 to which the source cell belongs interacts with the eNB 51 to which the target cell belongs through an S1 interface, or an X2 interface, or a wireless air interface or a backhaul link.

Sixth: as shown in Fig. 8, the system includes: a central node 52 and an eNB 53 to which a source cell belongs, wherein
the central node 52 sends source cell determination information and listening RS subframe position information to the eNB 53 to which the source cell belongs of a cell selected as a source cell; and
the eNB 53 to which the source cell belongs sends a listening RS at a listening RS subframe position according to the listening RS subframe position information.

Here, the central node 52 includes an eNB to which a macro cell belongs and a network element of a core network; and
the central node 52 interacts with the eNB 53 to which the source cell belongs through an S1 interface, or an X2 interface, or a wireless air interface or a backhaul link.

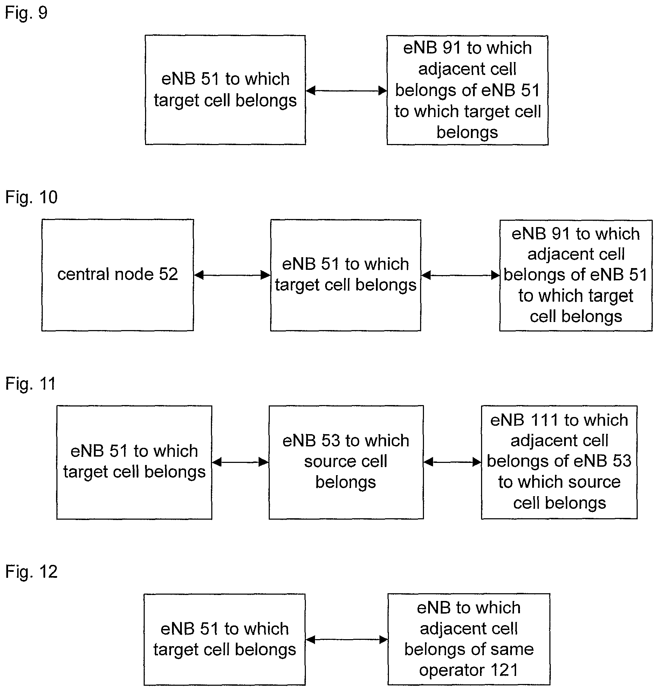

Seventh: as shown in Fig. 9, the system includes: an eNB 51 to which a target cell belongs and an eNB 91 to which an adjacent cell belongs of the eNB 51 to which the target cell belongs, wherein
the eNB 51 to which the target cell belongs obtains a listening RS subframe position, sends listening RS subframe position information to the eNB 91 to which the adjacent cell belongs, and indicates
the eNB 91 to which the adjacent cell belongs to execute muting at the listening RS subframe position; and
in an embodiment, the eNB 51 to which the target cell belongs is specifically configured to receive the listening RS subframe position sent by a central node or request responses which are sent by eNBs to which candidate source cells belong and contain listening RS subframe position information, layer numbers and RS configuration information.

In an embodiment, the eNB 51 to which the target cell belongs is specifically configured to send the listening RS subframe position information to the eNB 91 to which the adjacent cell belongs through an S1 interface, or an X2 interface, or a wireless air interface or a backhaul link, and indicate, through identification information or a command message, the eNB 91 to which the adjacent cell belongs to execute muting at the listening RS subframe position.

In an embodiment, the eNB 51 to which the target cell belongs is specifically configured to send the listening RS subframe position information to the eNB 91 to which the adjacent cell belongs through the S1 interface, or the X2 interface, or the wireless air interface or the backhaul link.

In an embodiment, the eNB 51 to which the target cell belongs is specifically configured to send the identification information or the command message to the eNB 91 to which the adjacent cell belongs through the S1 interface, or the X2 interface, or the wireless air interface or the backhaul link; and
the eNB 91 to which the adjacent cell belongs is configured to execute muting at a listening RS subframe position or determine whether to execute muting at the listening RS subframe position according to own condition after receiving the listening RS subframe position information and the indication.

Here, the eNB 51 to which the target cell belongs is configured to describe the listening RS subframe position information through period information of a listening RS subframe and starting subframe position information of the listening RS subframe.

The listening RS subframe position information is information about a subframe position where the eNB 51 to which the target cell belongs monitors an RS.

Eighth: as shown in Fig. 10, the system includes: a central node 52, an eNB 51 to which a target cell belongs and an eNB 91 to which an adjacent cell belongs of the eNB 51 to which the target cell belongs, wherein
the central node 52 determines a listening RS subframe position of a target cell, and sends listening RS subframe position information to the eNB 51 to which the target cell belongs;
the eNB 51 to which the target cell belongs sends the listening RS subframe position information to the eNB 91 to which the adjacent cell belongs of the eNB 51 to which the target cell belongs; and
the eNB 91 to which the adjacent cell belongs of the eNB 51 to which the target cell belongs receives the listening RS subframe position information.

Here, the central node 52 includes an eNB to which a macro cell belongs and a network element of a core network; and
the central node 52, the eNB 51 to which the target cell belongs and the eNB 91 to which the adjacent cell belongs of the eNB 51 to which the target cell belongs interact through an S1 interface, or an X2 interface, or a wireless air interface or a backhaul link.

Ninth: as shown in Fig. 10, the system includes: a central node 52, an eNB 51 to which a target cell belongs and an eNB 91 to which an adjacent cell belongs of the eNB 51 to which the target cell belongs, wherein
the central node 52 determines a listening RS subframe position of a target cell, sends listening RS subframe position information to the eNB 51 to which the target cell belongs and the eNB 91 to which the adjacent
cell belongs of the eNB 51 to which the target cell belongs, and indicates the eNB 91 to which the adjacent cell belongs of the eNB 51 to which the target cell belongs to execute muting at the listening RS subframe position;
the eNB 51 to which the target cell belongs receives the listening RS subframe position information; and
the eNB 91 to which the adjacent cell belongs of the eNB 51 to which the target cell belongs receives the listening RS subframe position information and the indication.

Here, the central node 52 includes an eNB to which a macro cell belongs and a network element of a core network; and
the central node 52 interacts with the eNB 51 to which the target cell belongs and the eNB 91 to which the adjacent cell belongs of the eNB 51 to which the target cell belongs through an S1 interface, or an X2 interface, or a wireless air interface or a backhaul link.

Tenth: as shown in Fig. 11, the system includes: an eNB 51 to which a target cell belongs, an eNB 53 to which a source cell belongs and an eNB 111 to which an adjacent cell belongs of the eNB 53 to which the source cell belongs, wherein
the eNB 51 to which the target cell belongs selects the eNB 53 to which the source cell belongs, and sends source cell determination information containing listening RS subframe position information to the selected eNB 53 to which the source cell belongs;
the eNB 53 to which the source cell belongs receives the source cell determination information, and sends the listening RS subframe position information to an eNB 111 to which its own adjacent cell belongs; and
the eNB 111 to which the adjacent cell belongs of the eNB 53 to which the source cell belongs executes muting at a listening RS subframe position according to the listening RS subframe position information.

Here, when the eNB 51 to which the target cell belongs, the eNB 53 to which the source cell belongs and the eNB 111 to which the adjacent cell belongs interact, interaction is implemented through an S1 interface, or an X2 interface, or a wireless air interface or a backhaul link.

Eleventh: as shown in Fig. 12, the system includes: an eNB 51 to which a target cell belongs and an eNB 121 to which an adjacent cell belongs belonging to the same operator, wherein
the eNB 51 to which the target cell belongs sends listening RS subframe position information to the eNB 121 to which the adjacent cell belongs belonging to the same operator, and indicates the eNB 121 to which the adjacent cell belongs belonging to the same operator to execute muting at a listening RS subframe position; and
the eNB 121 to which the adjacent cell belongs belonging to the same operator receives the listening RS subframe position information and the indication, and then the eNB 121 to which the adjacent cell belongs belonging to the same operator may immediately execute muting at the listening RS subframe position, and may also determines whether to execute muting at the listening RS subframe position according to own condition.

Here, when the eNB 51 to which the target cell belongs interacts with the eNB 121 to which the adjacent cell belongs belonging to the same operator, interaction is implemented through an S1 interface, or an X2 interface, or a wireless air interface or a backhaul link.

The indication may be identification information or a command message, for example: identification information 1 or 0 indicates execution of muting, or command message muting indicates execution of muting.

Wherein, the listening RS subframe position information is described through period information of a listening RS subframe and starting subframe position information of the listening RS subframe, and the listening RS subframe position information is information about a subframe position where the eNB 51 to which the target cell
belongs monitors an RS.

The above is only the preferred embodiment of the disclosure, may be mixed for use under the condition of no conflicts among the embodiments, and is not intended to limit the scope of protection of the disclosure.

### INDUSTRIAL APPLICABILITY

According to the embodiments of the disclosure, a source cell may timely learn about whether it is selected as the source cell, so that the source cell may correctly send a listening RS when being off, and the problem that the source cell which may not learn about whether it is selected as the source cell by another cell may not judge whether to continue sending the listening RS when being off in an existing process is further solved.

## Claims

1. An air interface synchronization method, comprising:
obtaining, by an evolved Node B, eNB, to which a target cell belongs, a listening Reference Signal, RS, subframe position, sending listening RS subframe position information to an eNB to which an adjacent cell belongs, and indicating the eNB to which the adjacent cell belongs to execute muting at the listening RS subframe position.

2. The method according to claim 1, wherein obtaining, by the eNB to which the target cell belongs, the listening RS subframe position comprises:
receiving, by the eNB to which the target cell belongs, the listening RS subframe position sent by a central node or request responses which are sent by eNBs to which candidate source cells belong and contain the listening RS subframe position information, layer numbers and RS configuration information.

3. The method according to claim 1, wherein sending the listening RS subframe position information to the eNB to which the adjacent cell belongs and indicating the eNB to which the adjacent cell belongs to execute muting at the listening RS subframe position comprises:
sending the listening RS subframe position information to the eNB to which the adjacent cell belongs through an S1 interface, or an X2 interface, or a wireless air interface or a backhaul link, and indicating, through identification information or a command message, the eNB to which the adjacent cell belongs to execute muting at the listening RS subframe position; or
sending the listening RS subframe position information to the eNB to which the adjacent cell belongs through the S1 interface, or the X2 interface, or the wireless air interface or the backhaul link, and after the eNB to which the adjacent cell belongs receives the listening RS subframe position information and the indication, executing, by the eNB to which the adjacent cell belongs, muting at the listening RS subframe position, or determining, by the eNB to which the adjacent cell belongs, whether to execute muting at the listening RS subframe position according to own condition.

4. The method according to claim 1, wherein the listening RS subframe position information is described through period information of a listening RS subframe and starting subframe position information of the listening RS subframe; or
the listening RS subframe position information is information about a subframe position where the eNB to which the target cell belongs monitors an RS.

5. The method according to claim 3, wherein the identification information or the command message is sent to the eNB to which the adjacent cell belongs through the S1 interface, or the X2 interface, or the wireless air interface or the backhaul link.

6. The method according to claim 4, wherein a starting subframe position indicated by the starting subframe position information is defined with respect to subframe 0 of radio frame 0.

7. An air interface synchronization system, comprising: an evolved Node B, eNB (51), to which a target cell belongs and an eNB (91) to which an adjacent cell belongs,
wherein the eNB (51) to which the target cell belongs is configured to obtain a listening Reference Signal, RS, subframe position, send listening RS subframe position information to the eNB (91) to which the adjacent cell belongs, and indicate the eNB (91) to which the adjacent cell belongs to execute muting at the listening RS subframe position.

8. The system according to claim 7, wherein the eNB (51) to which the target cell belongs is configured to receive the listening RS subframe position sent by a central node (52) or request responses which are sent by eNBs to which candidate source cells belong and contain the listening RS subframe position information, layer numbers and RS configuration information.

9. The system according to claim 7, wherein the eNB (51) to which the target cell belongs is configured to:
send the listening RS subframe position information to the eNB (91) to which the adjacent cell belongs through an S1 interface, or an X2 interface, or a wireless air interface or a backhaul link, and indicate, through identification information or a command message, the eNB (91) to which the adjacent cell belongs to execute muting at the listening RS subframe position; or
send the listening RS subframe position information to the eNB (91) to which the adjacent cell belongs through the S1 interface, or the X2 interface, or the wireless air interface or the backhaul link; and
the eNB (91) to which the adjacent cell belongs is configured to, after receiving the listening RS subframe position information and the indication, execute muting at the listening RS subframe position, or determine whether to execute muting at the listening RS subframe position according to own condition.

10. The system according to claim 7, wherein the eNB (51) to which the target cell belongs is configured to describe the listening RS subframe position information through period information of a listening RS subframe and starting subframe position information of the listening RS subframe.

11. The system according to claim 7, wherein the listening RS subframe position information is information about a subframe position where the eNB (51) to which the target cell belongs monitors an RS.

12. The system according to claim 9, wherein the eNB (51) to which the target cell belongs is configured to indicate, through the identification information or the command message, the eNB (91) to which the adjacent cell belongs to execute muting at the listening RS subframe position, wherein the identification information or the command message is sent to the eNB (91) to which the adjacent cell belongs through the S1 interface, or the X2 interface, or the wireless air interface or the backhaul link.

## Patentansprüche

1. Funkschnittstellensynchronisationsverfahren, umfassend:
Erhalten, durch einen entwickelten Knoten B, eNB, zu dem eine Zielzelle gehört, einer Empfangsreferenzsignal, RS, -Teilrasterposition, Senden von Empfangs-RS-Teilrasterpositionsinformationen zu einem eNB, zu dem eine benachbarte Zelle gehört, und Anweisen des eNB, zu dem die benachbarte Zelle gehört, ein Stummschalten an der Empfangs-RS-Teilrasterposition auszuführen.

2. Verfahren nach Anspruch 1, bei dem das Erhalten, durch den eNB, zu dem die Zielzelle gehört, der Empfangs-RS-Teilrasterposition umfasst:
Empfangen, durch den eNB, zu dem die Zielzelle gehört, der Empfangs-RS-Teilrasterposition, die durch einen zentralen Knoten gesendet worden ist, oder von Anfrageantworten, die durch die eNBs gesendet werden, zu denen potenzielle Quellenzellen gehören und welche die Empfangs-RS-Teilrasterpositionsinformationen, Schichtanzahlen und RS-Konfigurationsinformationen enthalten.

3. Verfahren nach Anspruch 1, bei dem das Senden der Empfangs-RS-Teilrasterpositionsinformationen zu dem eNB, zu dem die benachbarte Zelle gehört, und das Anweisen des eNB, zu dem die benachbarte Zelle gehört, ein Stummschalten an der Empfangs-RS-Teilrasterposition auszuführen, umfasst:
Senden der Empfangs-RS-Teilrasterpositionsinformationen zu dem eNB, zu dem die benachbarte Zelle gehört, durch eine S1-Schnittstelle oder eine X2-Schnittstelle oder eine drahtlose Funkschnittstelle oder eine Backhaulverknüpfung, und Anweisen, durch Identifizierungsinformationen oder eine Anweisungsnachricht, des eNB, zu dem die benachbarte Zelle gehört, ein Stummschalten an der Empfangs-RS-Teilrasterposition auszuführen; oder
Senden der Empfangs-RS-Teilrasterpositionsinformationen zu dem eNB, zu dem die benachbarte Zelle gehört, durch die S1-Schnittstelle oder die X2-Schnittstelle oder die drahtlose Funkschnittstelle oder die Backhaulverknüpfung, und nachdem der eNB, zu dem die benachbarte Zelle gehört, die Empfangs-RS-Teilrasterpositionsinformationen und die Anweisung empfangen hat, Ausführen, durch den eNB, zu dem die benachbarte Zelle gehört, eines Stummschaltens an der Empfangs-RS-Teilrasterposition, oder Bestimmen, durch den eNB, zu dem die benachbarte Zelle gehört, ob ein Stummschalten an der Empfangs-RS-Teilrasterposition gemäß eigener Bedingungen ausgeführt werden soll.

4. Verfahren nach Anspruch 1, bei dem die Empfangs-RS-Teilrasterpositionsinformationen durch Periodeninformationen eines Empfangs-RS-Teilrasters und Startteilrasterpositionsinformationen des Empfangs-RS-Teilrasters beschrieben werden; und
die Empfangs-RS-Teilrasterpositionsinformationen Informationen über eine Teilrasterposition sind, bei denen der eNB, zu dem die Zielzelle gehört, ein RS überwacht.

5. Verfahren nach Anspruch 3, bei dem die Identifizierungsinformationen oder die Anweisungsnachricht zu dem eNB, zu dem die benachbarte Zelle gehört, durch die S1-Schnittstelle oder die X2-Schnittstelle oder die drahtlose Funkschnittstelle oder die Backhaulverknüpfung gesendet werden oder wird.

6. Verfahren nach Anspruch 4, bei dem eine Startteilrasterposition, die durch die Startteilrasterpositionsinformationen angegeben wird, bezüglich des Teilrasters 0 des Funkrasters 0 festgelegt ist.

7. Funkschnittstellensynchronisationssystem, umfassend: einen entwickelten Knoten B, eNB (51), zu dem eine Zielzelle gehört, und einen eNB (91), zu dem eine benachbarte Zelle gehört,
wobei der eNB (51), zu dem die Zielzelle gehört, zum Erhalten einer Empfangsreferenzsignal, RS, -Teilrasterposition, Senden von Empfangs-RS-Teilrasterpositionsinformationen zu dem eNB (91), zu dem die benachbarte Zelle gehört, und Anweisen des eNB (91), zu dem die benachbarte Zelle gehört, ein Stummschalten an der Empfangs-RS-Teilrasterposition auszuführen, ausgebildet ist.

8. System nach Anspruch 7, bei dem der eNB (51), zu dem die Zielzelle gehört, zum Empfangen der Empfangs-RS-Teilrasterposition, die durch einen zentralen Knoten (52) gesendet worden ist, oder von Anfrageantworten, die durch die eNBs gesendet werden, zu denen potenzielle Quellenzellen gehören und welche die Empfangs-RS-Teilrasterpositionsinformationen, Schichtanzahlen und RS-Konfigurationsinformationen enthalten, ausgebildet ist.

9. System nach Anspruch 7, bei dem der eNB (51), zu dem die Zielzelle gehört, ausgebildet ist zum:
Senden der Empfangs-RS-Teilrasterpositionsinformationen zu dem eNB (91), zu dem die benachbarte Zelle gehört, durch eine S1-Schnittstelle oder eine X2-Schnittstelle oder eine drahtlose Funkschnittstelle oder eine Backhaulverknüpfung, und Anweisen, durch Identifizierungsinformationen oder eine Anweisungsnachricht, des eNB (91), zu dem die benachbarte Zelle gehört, ein Stummschalten an der Empfangs-RS-Teilrasterposition auszuführen; oder
Senden der Empfangs-RS-Teilrasterpositionsinformationen zu dem eNB (91), zu dem die benachbarte Zelle gehört, durch die S1-Schnittstelle oder die X2-Schnittstelle oder die drahtlose Funkschnittstelle oder die Backhaulverknüpfung, und
der eNB (91), zu dem die benachbarte Zelle gehört, nach dem Empfangen der Empfangs-RS-Teilrasterpositionsinformationen und der Anweisung, zum Ausführen eines Stummschaltens an der Empfangs-RS-Teilrasterposition, oder Bestimmen, ob ein Stummschalten an der Empfangs-RS-Teilrasterposition gemäß eigener Bedingungen ausgeführt werden soll, ausgebildet ist.

10. System nach Anspruch 7, bei dem der eNB (51), zu dem die Zielzelle gehört, zum Beschreiben der Empfangs-RS-Teilrasterpositionsinformationen durch Periodeninformationen eines Empfangs-RS-Teilrasters und Startteilrasterpositionsinformationen des Empfangs-RS-Teilrasters ausgebildet ist.

11. System nach Anspruch 7, bei dem die Empfangs-RS-Teilrasterpositionsinformationen Informationen über eine Teilrasterposition sind, bei denen der eNB (51), zu dem die Zielzelle gehört, ein RS überwacht.

12. System nach Anspruch 9, bei dem der eNB (51), zu dem die Zielzelle gehört, zum Anweisen, durch die Identifizierungsinformationen oder die Anweisungsnachricht des eNB (91), zu dem die benachbarte Zelle gehört, ein Stummschalten an der Empfangs-RS-Teilrasterposition auszuführen, ausgebildet ist, wobei die Identifizierungsinformationen oder die Anweisungsnachricht zu dem eNB (91), zu dem die benachbarte Zelle gehört, durch die S1-Schnittstelle oder die X2-Schnittstelle oder die drahtlose Funkschnittstelle oder die Backhaulverknüpfung gesendet werden oder wird.

## Revendications

1. Procédé de synchronisation d'interface radio, comprenant :
obtenir, par un noeud B évolué, eNB, auquel une cellule cible appartient, une position de sous-trame de signal de référence, RS, d'écoute, envoyer des informations de position de sous-trame RS d'écoute à un eNB auquel une cellule adjacente appartient, et indiquer l'eNB auquel la cellule adjacente appartient pour exécuter une insensibilisation à la position de sous-trame RS d'écoute.

2. Procédé selon la revendication 1, dans lequel l'obtention, par l'eNB auquel la cellule cible appartient, de la position de sous-trame RS d'écoute comprend :
recevoir, par l'eNB auquel la cellule cible appartient, la position de sous-trame RS d'écoute envoyée par un noeud central ou des réponses à une demande qui sont envoyées par des eNB auxquels des cellules sources candidates appartiennent et contiennent les informations de position de sous-trame RS d'écoute, des numéros de couche et des informations de configuration RS.

3. Procédé selon la revendication 1, dans lequel l'envoi des informations de position de sous-trame RS d'écoute à l'eNB auquel la cellule adjacente appartient et l'indication de l'eNB auquel la cellule adjacente appartient pour exécuter une insensibilisation à la position de sous-trame RS d'écoute comprend :
envoyer les informations de position de sous-trame RS d'écoute à l'eNB auquel la cellule adjacente appartient par le biais d'une interface S1, ou d'une interface X2, ou d'une interface radio sans fil, ou d'une liaison terrestre, et indiquer, par le biais d'informations d'identification ou d'un message d'ordre, l'eNB auquel la cellule adjacente appartient pour exécuter une insensibilisation à la position de sous-trame RS d'écoute ; ou
envoyer les informations de position de sous-trame RS d'écoute à l'eNB auquel la cellule adjacente appartient par le biais de l'interface S1, ou de l'interface X2, ou de l'interface radio sans fil, ou de la liaison terrestre, et après que l'eNB auquel la cellule adjacente appartient reçoit des informations de position de sous-trame RS d'écoute et l'indication, exécuter, par l'eNB auquel la cellule adjacente appartient, une insensibilisation à la position de sous-trame RS d'écoute, ou le fait de déterminer, par l'eNB auquel la cellule adjacente appartient, s'il faut exécuter une insensibilisation à la position de sous-trame RS d'écoute selon une condition propre.

4. Procédé selon la revendication 1, dans lequel les informations de position de sous-trame RS d'écoute sont décrites par le biais d'informations de période d'une sous-trame RS d'écoute et d'informations de position de sous-trame de démarrage de la sous-trame RS d'écoute ; ou
les informations de position de sous-trame RS d'écoute sont des informations concernant une position de sous-trame où l'eNB auquel la cellule cible appartient surveille un RS.

5. Procédé selon la revendication 3, dans lequel les informations d'identification ou le message d'ordre sont envoyés à l'eNB auquel la cellule adjacente appartient par le biais de l'interface S1, ou de l'interface X2, ou de l'interface radio sans fil, ou de la liaison terrestre.

6. Procédé selon la revendication 4, dans lequel une position de sous-trame de démarrage indiquée par les informations de position de sous-trame de démarrage est définie par rapport à la sous-trame 0 de la trame radio 0.

7. Système de synchronisation d'interface radio, comprenant : un noeud B évolué, eNB (51), auquel une cellule cible appartient et un eNB (91) auquel une cellule adjacente appartient,
dans lequel l'eNB (51) auquel la cellule cible appartient est configuré pour obtenir une position de sous-trame de signal de référence, RS, d'écoute, envoyer des informations de position de sous-trame RS d'écoute à l'eNB (91) auquel la cellule adjacente appartient, et indiquer l'eNB (91) auquel la cellule adjacente appartient pour exécuter une insensibilisation à la position de sous-trame RS d'écoute.

8. Système selon la revendication 7, dans lequel l'eNB (51) auquel la cellule cible appartient est configuré pour recevoir la position de sous-trame RS d'écoute envoyée par un noeud central (52) ou des réponses à une demande qui sont envoyées par des eNB auxquels des cellules sources candidates appartiennent et contiennent les informations de position de sous-trame RS d'écoute, des numéros de couche et des informations de configuration RS.

9. Système selon la revendication 7, dans lequel l'eNB (51) auquel la cellule cible appartient est configuré pour :
envoyer les informations de position de sous-trame RS d'écoute à l'eNB (91) auquel la cellule adjacente appartient par le biais d'une interface S1, ou d'une interface X2, ou d'une interface radio sans fil, ou d'une liaison terrestre, et indiquer, par le biais d'informations d'identification ou d'un message d'ordre, l'eNB (91) auquel la cellule adjacente appartient pour exécuter une insensibilisation à la position de sous-trame RS d'écoute ; ou
envoyer les informations de position de sous-trame RS d'écoute à l'eNB (91) auquel la cellule adjacente appartient par le biais de l'interface S1, ou de l'interface X2, ou de l'interface radio sans fil, ou de la liaison terrestre ; et
l'eNB (91) auquel la cellule adjacente appartient est configuré, après réception des informations de position de sous-trame RS d'écoute et de l'indication, pour exécuter une insensibilisation à la position de sous-trame RS d'écoute, ou déterminer s'il faut exécuter une insensibilisation à la position de sous-trame RS d'écoute selon une condition propre.

10. Système selon la revendication 7, dans lequel l'eNB (51) auquel la cellule cible appartient est configuré pour décrire les informations de position de sous-trame RS d'écoute par le biais d'informations de période d'une sous-trame RS d'écoute et d'informations de position de sous-trame de démarrage de la sous-trame RS d'écoute.

11. Système selon la revendication 7, dans lequel les informations de position de sous-trame RS d'écoute sont des informations concernant une position de sous-trame où l'eNB (51) auquel la cellule cible appartient surveille un RS.

12. Système selon la revendication 9, dans lequel l'eNB (51) auquel la cellule cible appartient est configuré pour indiquer, par le biais des informations d'identification ou du message d'ordre, l'eNB (91) auquel la cellule adjacente appartient pour exécuter une insensibilisation à la position de sous-trame RS d'écoute, dans lequel les informations d'identification ou le message d'ordre sont envoyés à l'eNB (91) auquel la cellule adjacente appartient par le biais de l'interface S1, ou de l'interface X2, ou de l'interface radio sans fil, ou de la liaison terrestre.
